Europäisches Patentamt

European Patent Office

Office européen des brevets

(11) Publication number: **0 369 750 B1**

# EUROPEAN PATENT SPECIFICATION

(45) Date of publication of patent specification: **02.11.94**  (51) Int. Cl.⁵: **C09J  7/02**

(21) Application number: **89311791.1**

(22) Date of filing: **15.11.89**

---

(54) **A new covering member.**

---

(30) Priority: **17.11.88 US 272723**

(43) Date of publication of application:
**23.05.90 Bulletin  90/21**

(45) Publication of the grant of the patent:
**02.11.94 Bulletin  94/44**

(84) Designated Contracting States:
**DE FR GB IT SE**

(56) References cited:
**EP-A- 0 040 480**
**EP-A- 0 239 348**
**US-A- 3 619 344**

(73) Proprietor: **NAGOYA OILCHEMICAL CO., LTD.**
**213-5 Honowari**
**Minamishibata-cho**
**Tokai-shi Aichi (JP)**

(72) Inventor: **Makino, Reiji c/o Nagoya Oilchem-**
**ical Co., Ltd.**
**213-5 Honowari**
**Minamishibata-cho**
**Tokai Aichi (JP)**
Inventor: **Ito, Kuninori c/o Nagoya Oilchemical**
**Co., Ltd.**
**213-5 Honowari**
**Minamishibata-cho**
**Tokai Aichi (JP)**
Inventor: **Unno, Tetuji c/o Nagoya Oilchemical**
**Co., Ltd.**
**213-5 Honowari**
**Minamishibata-cho**
**Tokai Aichi (JP)**
Inventor: **Horiki, Seinosuke c/o Nagoya Oil-**
**chemical Co., Ltd.**
**213-5 Honowari**
**Minamishibata-cho**
**Tokai Aichi (JP)**

(74) Representative: **Senior, Alan Murray et al**
**J.A. KEMP & CO.,**
**14 South Square,**
**Gray's Inn**
**London WC1R 5LX (GB)**

**Description**

The present invention relates to a new covering member which may be used, for example, as a masking member or a packing member. Such masking members may be used in the coating processes of vehicles such as cars.

Hitherto, a covering member comprising a base and an adhesive layer has been provided as, for example, a masking member or a packing member. The covering member can be attached to a surface of an article by means of its adhesive layer. It is desirable to prevent the adhesive layer from transferring from the covering member to the surface of the article and to achieve this it is known to cross-link slightly the adhesive layer to give a large cohesive force or to mix a release agent with the adhesive layer to prevent it sticking to the surface of the article. The degree of cross-linking in the adhesive layer is important and if the degree of cross-linking is only a little higher than desired the stickiness of the adhesive layer is remarkably decreased, while sticking cannot be prevented if the degree of cross-linking is only a little lower than desired. Mixing a release agent with the adhesive layer may cause deterioration of properties such as stickiness, weatherability and heat resistance.

EP-A-0239348 discloses a covering member comprising a polystyrene base of unspecified density and an adhesive layer formed by coating a mixture of an emulsion-type adhesive and a water-soluble polymer onto a surface of the base and drying the coating.

The present invention seeks to prevent the adhesive layer of the covering member from transferring to the surface of the article, while retaining the stickiness, weatherability and heat resistance properties of the adhesive layers.

Accordingly the present invention provides a masking member consisting essentially of a molded foamed closed cell polystyrene base having a density from 12.5 to 50 g/l and an adhesive layer formed on a surface of said polystyrene base by coating said surface of said base with a composition consisting essentially of an emulsion-type adhesive in which a water-soluble polymer is mixed in an amount in the range from 0.1 to 20% by weight of the weight of said emulsion-type adhesive.

The addition of the water-soluble polymer to the emulsion-type adhesive may increase the cohesive force of the adhesive and at the same time give the adhesive a releasing property, that is to say prevent the adhesive layer from transferring to the surface of the article to which the covering member is attached. Since the water-soluble polymer preferably does not soften even at relatively high temperatures, the cohesive force of the adhesive does not decrease at these high temperatures. The water-soluble polymer does not unduly deteriorate the stickiness and weatherability properties of the adhesive.

The base used in the present invention consists essentially of a molded foamed closed cell polystyrene base and an adhesive layer formed on a surface of said polystyrene base by coating said surface of said base with a composition consisting essentially of an emulsion-type adhesive in which a water-soluble polymer is mixed.

The adhesive used is an emulsion-type adhesive to allow the water-soluble polymer to be dissolved and uniformly mixed in the emulsion. The adhesive may be, for example, a rubber latex such as a natural rubber latex, a styrene-butadiene rubber latex, a styrene-butadiene block copolymer latex, a styreneisoprene block copolymer latex, acrylonitrile-butadiene rubber latex, an isoprene rubber latex, a chloroprene rubber latex, a butyl rubber latex, a polyisobutylene rubber latex, a polybutene rubber latex or a graft rubber latex, or a synthetic resin emulsion such as an acrylic resin emulsion, a methacrylic resin emulsion, a vinyl acetate resin emulsion, a vinyl propionate resin emulsion, a vinyl acetate-ethylene copolymer emulsion, a styrene resin emulsion, a vinyl chloride resin emulsion, a vinyl chloride-ethylene copolymer emulsion, a vinyl chloride-vinyl acetate copolymer emulsion, a vinylidene chloride resin emulsion or a vinyl ether resin emulsion. The rubber latex or synthetic resin emulsion should have stickiness at room temperature. Two or more kinds of rubber latex and synthetic resin may be mixed, and in this case the resulting mixture should have stickiness at room temperature. It may not always be necessary that any one rubber latex or synthetic resin emulsion component should itself have stickiness at room temperature.

Dibutylphthalate, dioctylphthalate, tricresylphosphate or terpene dimer as a plasticizer or softening agent may be mixed in the latex or emulsion. In this case, the resulting mixture should again have stickiness at room temperature. Any one or more than one of a stickifier such as a rosin, a rosin derivative, a petroleum resin, a cumarone resin, a terpene resin, a phenol resin or an alkyl phenol resin; an organic solvent or a wetting-agent such as toluene, xylene, ethyl acetate, n-butyl acetate, methyl-ethyl ketone, methyl-isobutyl ketone, cellosolve acetate, n-butyl cellosolve, ethylene glycol, diethylene glycol, propylene glycol, glycerine, polyethylene glycol or polypropylene glycol; or a filler such as talc, bentonite or calcium carbonate may be mixed with the adhesive.

The amount of water present in the emulsion is not critical since it has been found that it does not affect the adhesion of the covering member. It may, of course, affect the viscosity and time required to dry the emulsion. Suitably the emulsion-type adhesive has a solids content of from 40 to 60% by weight.

Examples of the water-soluble polymer include glue, gelatine, casein, starch, modified starch, dextrin, gum Arabic, sodium alginate, polyvinyl alcohol, carboxymethyl cellulose, methyl cellulose, hydroxyethyl cellulose, polysodium acrylate, polysodium methacrylate, polyacrylamide, polymethacrylamide, polyvinyl-methyl ether, vinyl acetate-maleic acid copolymer, styrene-maleic acid copolymer, isobutylene-maleic acid copolymer, polyvinyl pyrrolidone and partially saponified polyacrylate.

The water-soluble polymer is added to the emulsion-type adhesive in an amount of from 0.1 to 20%, desirably 0.1 to 10%, by weight of the emulsion. If the amount of water-soluble polymer added is more than 20 weight percent, the stickiness of the adhesive tends to decrease; however if the adhesive has enough stickiness, the adhesive may still be practical even when the amount of water-soluble polymer added is more than 20 weight percent. If the amount of water-soluble polymer added is less than 0.1 weight percent, it may be difficult to prevent the adhesive from transferring to the surface of an article to which the covering member is applied. Usually the water-soluble polymer may be added to the emulsion-type adhesive after the emulsion-type adhesive has been produced. However the water-soluble polymer may be added to the water which is used for the emulsion before the emulsion-type adhesive is produced (polymerized or emulsified). The water-soluble polymer may generally be added to the emulsion-type adhesive in the form of a powder, flakes or an aqueous solution. In the case of an aqueous solution the solids content of the solution is preferably from 0.1 to 10% by weight. The determination of the solids content is based on the desired viscosity characteristics of the aqueous solution and on the amount of solution to be added.

As above described, the density of the foamed closed cell polystyrene base should be in the range from 12.5 to 50 g/l in combination with the above described emulsion type adhesive. The reason of said limitation about the density is as follows.

Usually a hook is used to remove the masking member from a part of a surface of an article on which the masking member has been attached. Easiness of removal of the masking member is very significant for smooth proceeding of the surface treatment process and said easiness depends on easiness of hooking and the mechanical strength of the masking member. If the hook is not securely stuck into the masking member or the masking member is broken when the masking member is removed, the surface treatment process, especially continuous surface treatment in mass production, may be much obstructed. If the density of the foamed closed cell polystyrene base of the masking member is more than about 50 g/l, the mechanical strength of the masking member may be too high for smooth hooking, and if the density of the foamed closed cell polystyrene base of the masking member is less than about 12.5 g/l, the masking member may be broken by the bonding strength of the adhesive layer formed on the surface of the polystyrene base by coating said surface of said base with a composition consisting essentially of the emulsion type adhesive in which the water-soluble polymer is mixed in an amount in the range from 0.1 to 20% by weight of the weight of said emulsion-type adhesive.

To prepare the covering member of the invention, the emulsion-type adhesive and water-soluble polymer may be coated onto a surface of a base and, if desired, this coating may be dried by heating to form the adhesive layer. The weight of the adhesive layer may commonly be from 50 to 100 g/m$^2$.

EXAMPLE 1

70 parts by weight of a natural rubber latex (50 weight percent solids content) and 50 parts by weight of a terpene resin emulsion were mixed together and two kinds of the water-soluble polymer were respectively mixed in as shown in Table 1. The amounts referred to are parts by weight.

TABLE 1

|  | 1 | 2 | 3 | 4 | 5 | 6 | 7 | 8 | 9 | 10 | 11 |
|---|---|---|---|---|---|---|---|---|---|---|---|
| Emulsion-type adhesive | 100 | 100 | 100 | 100 | 100 | 100 | 100 | 100 | 100 | 100 | 100 |
| Polysodium styrene sulfonate | - | 0.01 | 0.05 | 5 | 10 | 20 | - | - | - | - | - |
| Gelatin | - | - | - | - | - | - | 0.01 | 0.05 | 5 | 10 | 20 |

The resulting emulsion-type adhesives were respectively coated on a surface of a foamed closed cell polystyrene panel of density 30 g/l as a base in an amount of 50 g/m$^2$ and the adhesive layer was dried to produce a covering member. The covering members were tested with respect to the peeling strength of the adhesive layer and the transfer of the adhesive and the results of these tests are shown in Table 2.

TABLE 2

| | | | 1 | 2 | 3 | 4 | 5 | 6 | 7 | 8 | 9 | 10 | 11 |
|---|---|---|---|---|---|---|---|---|---|---|---|---|---|
| (1)Peeling strength g/25 mm | | | 300 | 300 | 300 | 290 | 280 | 160 | 300 | 300 | 290 | 280 | 160 |
| (2)Transfer of adhesive (at room temperature) | 1 day after | | ✕ | △ | ○ | ○ | ○ | ○ | △ | ○ | ○ | ○ | ◎ |
| | 30 days after | | ✕ | △ | ○ | ○ | ○ | ○ | △ | ◎ | ○ | ◎ | ◎ |
| (3)Transfer of adhesives (at 80°C) | | | ✕ | ✕ | ○ | ○ | ○ | ○ | ✕ | ○ | ○ | ○ | ◎ |

◎ : no transfer

○ : slight transfer

△ : fair transfer

✕ : remarkable transfer

     (1) Peeling strength: the covering member was attached by means of its adhesive layer to the surface of a steel panel coated with paint. After one day, peeling strength (180°) was measured at 20°C.

     (2) Transfer of adhesive (at room temperature): the covering member was attached by means of its adhesive layer to the surface of a steel panel coated with paint. The test piece was kept at 20°C for one day or at room temperature for 30 days. The covering member was then peeled from the steel panel and transfer of the adhesive to the steel panel was observed.

     (3) Transfer of adhesive (at 80°C): the covering member was attached by means of its adhesive layer to the surface of the steel panel coated with paint. The test

4

piece was kept at room temperature for one day and then at 80°C for 1 hour. The covering member was then peeled from the steel panel and transfer of the adhesive to the steel panel was observed.

EXAMPLE 2

Two kinds of the water-soluble polymer were respectively mixed in an emulsion of a copolymer consisting of 70 parts by weight of n-butyl acrylate and 30 parts by weight of vinyl acetate (50 weight percent solids content) as shown in Table 3. The amounts referred to are parts by weight.

TABLE 3

| | 12 | 13 | 14 | 15 | 16 | 17 | 18 | 19 | 20 | 21 | 22 |
|---|---|---|---|---|---|---|---|---|---|---|---|
| Emulsion-type adhesive | 100 | 100 | 100 | 100 | 100 | 100 | 100 | 100 | 100 | 100 | 100 |
| Polyvinyl alcohol | - | 0.01 | 0.05 | 5 | 10 | 20 | - | - | - | - | - |
| Sodium alginate | - | - | - | - | - | - | 0.01 | 0.05 | 5 | 10 | 20 |

The resulting emulsion-type adhesives were respectively coated onto a surface of a panel of a polystyrene foam of density 30 g/l in an amount of 50 g/m$^2$ and the adhesive layer was dried to produce a covering member. The results of tests identical to those described in Example 1 except that on aluminium panel was used instead of a steel panel are shown in Table 4.

TABLE 4

| | | 12 | 13 | 14 | 15 | 16 | 17 | 18 | 19 | 20 | 21 | 22 |
|---|---|---|---|---|---|---|---|---|---|---|---|---|
| Peeling strength g/25 mm | | 400 | 400 | 400 | 395 | 390 | 200 | 400 | 400 | 390 | 380 | 180 |
| Transfer of adhesive (at room temperature) | 1 day after | X | △ | ◎ | ◎ | ◎ | ◎ | △ | ◎ | ◎ | ◎ | ◎ |
| | 30 days after | X | △ | ◎ | ◎ | ◎ | ◎ | △ | ◎ | ◎ | ◎ | ◎ |
| Transfer of adhesives (at 80°C) | | X | X | ○ | ◎ | ◎ | ◎ | X | ○ | ◎ | ◎ | ◎ |

EXAMPLE 3

Two kinds of water-soluble polymer were respectively mixed in 100 parts by weight of an emulsion of a copolymer (51.9 weight percent solid content) consisting of 100 parts by weight of butyl rubber latex (50 weight percent solids content), 3 parts by weight of talc, and 1 part by weight of propylene glycol as shown in Table 7. The amounts shown are parts by weight.

TABLE 5

| | 34 | 35 | 36 | 37 | 38 | 39 | 40 | 41 | 42 | 43 | 44 |
|---|---|---|---|---|---|---|---|---|---|---|---|
| Emulsion-type adhesive | 100 | 100 | 100 | 100 | 100 | 100 | 100 | 100 | 100 | 100 | 100 |
| Gelatine | - | 0.01 | 0.052 | 5 | 10 | 20 | - | - | - | - | - |
| Sodium alginate | - | - | - | - | - | - | 0.01 | 0.052 | 5 | 10 | 20 |

5

The resulting emulsion-type adhesives were respectively coated onto a surface of a panel of polystyrene foam as a base in an amount of 100 g/m$^2$ and the adhesive layer was dried to produce a covering member. The results of a transfer test after thermal aging of the covering members are shown in Table 6.

TABLE 6

| | | 34 | 35 | 36 | 37 | 38 | 39 | 40 | 41 | 42 | 43 | 44 |
|---|---|---|---|---|---|---|---|---|---|---|---|---|
| (4) Transfer of adhesive after thermal aging | 1 day after | X | △ | ◎ | ◎ | ◎ | ◎ | △ | ◎ | ◎ | ◎ | ◎ |
| | 1 month after | X | △ | ◎ | ◎ | ◎ | ◎ | △ | ◎ | ◎ | ◎ | ◎ |
| | 3 months after | X | X | ◎ | ◎ | ◎ | ◎ | X | ◎ | ◎ | ◎ | ◎ |
| | 6 months after | X | X | ◎ | ◎ | ◎ | ◎ | X | ◎ | ◎ | ◎ | ◎ |

(4) Transfer of the adhesive after thermal aging: the covering member was attached by means of its adhesive layer to surface of a steel panel coated with paint. The test piece was subjected to thermal aging at 40°C for 1 day, 1 month, 3 months, or 6 months. The covering member was then peeled from the steel panel and transfer of the adhesive to the steel panel was observed.

Example 4

Adhesive No. 15 and Adhesive No. 17 were selected in this example, and foamed closed cell polystyrene panels having various densities as shown in Table 7 were used as bases. Said adhesives No. 15 and No. 17 were respectively coated on surfaces of said based in amount of 50 g/m$^2$ and said adhesive layers were dried to manufacture masking members as shown in Table 7.

Table 7

| Masking member | Adhesive | Density (g/l) |
|---|---|---|
| A | No.15 | 12.0 |
| B | " | 12.5 |
| C | " | 13.0 |
| D | " | 15.0 |
| E | " | 20.0 |
| F | " | 25.0 |
| G | " | 30.0 |
| H | " | 40.0 |
| I | " | 45.0 |
| J | " | 50.0 |
| K | " | 50.5 |
| L | No.17 | 12.0 |
| M | " | 12.5 |
| N | " | 13.0 |
| O | " | 15.0 |
| P | " | 20.0 |
| Q | " | 25.0 |
| R | " | 30.0 |
| S | " | 40.0 |
| T | " | 45.0 |
| U | " | 50.0 |
| V | " | 50.5 |

Masking members in Table 7 were respectively attached to surfaces of steel panels by contacting with adhesive layers of masking members, and after one day, said masking members were stripped by a hook. Easiness of hooking for each masking member and break of each masking member when said masking member is stripped were observed and shown in Table 8.

Table 8

| Masking member | Easiness of hooking | Break of masking member |
| --- | --- | --- |
| A | Easy | Slightly |
| B | " | No |
| C | " | " |
| D | " | " |
| E | " | " |
| F | " | " |
| G | " | " |
| H | " | " |
| I | " | " |
| J | " | " |
| K | A little difficult | " |
| L | Easy | Slightly |
| M | " | No |
| N | " | " |
| O | " | " |
| P | " | " |
| Q | " | " |
| R | " | " |
| S | " | " |
| T | " | " |
| U | " | " |
| V | A little difficult | " |

As shown in Table 8, masking members K and V having a density more than 50 g/l were a little difficult to be hooked, and masking members A and L having a density less than 12.5 g/l were broken when they were stripped by the hook and pieces of broken masking members remained on surfaces of steel panels.

**Claims**

1. A masking member consisting essentially of a molded foamed closed cell polystyrene base having a density from 12.5 to 50 g/l and an adhesive layer formed on a surface of said polystyrene base by coating said surface of said base with a composition consisting essentially of an emulsion-type adhesive in which a water-soluble polymer is mixed in an amount in the range from 0.1 to 20% by weight of the weight of said emulsion-type adhesive.

2. The masking member of claim 1, wherein said emulsion-type adhesive is an acrylic emulsion.

3. The masking member of claim 1, wherein said emulsion-type adhesive is a natural rubber latex.

4. The masking member of any preceding claim, wherein said water-soluble polymer is a polyvinylalcohol.

5. The masking member of claim 1, 2 or 3, wherein said water-soluble polymer is a gelatine.

6. A method of masking a part to be surface treated by applying to areas to be protected from the surface treatment a member according to any preceding claim, applying the surface treatment and removing the member.

7. A method according to claim 6, wherein the member is removed by a hook.

8. A method according to claim 6 or 7, wherein the part is an automobile body.

**Patentansprüche**

1. Maskierungselement im wesentlichen mit einer geformten, geschäumten, geschlossenzelligen Polystyrolgrundlage, die eine Dichte von 12,5 bis 50 g/Liter aufweist, und einer Haftschicht, die auf einer Oberfläche der Polystyrolgrundlage gebildet wird, durch Beschichten der Oberfläche der Grundlage mit einer Zusammensetzung, die im wesentlichen aus einem Klebstoff vom Emulsionstyp besteht, in den ein wasserlösliches Polymer in einer Menge im Bereich von 0,1 bis 20 Gew.-%, bezogen auf das Gewicht des Klebstoffs vom Emulsionstyp, eingemischt ist.

2. Maskierungselement nach Anspruch 1, wobei der Klebstoff vom Emulsionstyp eine Acrylemulsion ist.

3. Maskierungselement nach Anspruch 1, wobei der Klebstoff vom Emulsionstyp ein Naturkautschuklatex ist.

4. Maskierungselement nach einem der vorangehenden Ansprüche, wobei das wasserlösliche Polymer ein Polyvinylalkohol ist.

5. Maskierungselement nach Anspruch 1, 2 oder 3, wobei das wasserlösliche Polymer eine Gelatine ist.

6. Verfahren zum Maskieren eines Teiles, das oberflächenbehandelt werden soll, durch Aufbringen eines Elements nach einem der vorangehenden Ansprüche, auf die vor der Oberflächenbehandlung zu schützenden Flächen, Ausführen der Oberflächenbehandlung und Entfernen des Elements.

7. Verfahren nach Anspruch 6, wobei das Element mit einem Haken entfernt wird.

8. Verfahren nach Anspruch 6 oder 7, wobei das Teil eine Kraftfahrzeugkarosserie ist.

**Revendications**

1. Elément de masquage constitué essentiellement d'une base moulée en polystyrène expansé à cellules fermées ayant une masse volumique de 12,5 à 50 g/litre et d'une couche adhésive formée sur une face de ladite base en polystyrène par revêtement de ladite surface de ladite base avec une composition constitué essentiellement d'un adhésif de type émulsion auquel est mélangé un polymère hydrosoluble à raison de 0,1 à 20 % en poids par rapport audit adhésif de type émulsion.

2. Element de masquage conforme à la revendication 1 dans lequel ledit adhésif de type émulsion est une émulsion acrylique.

3. Element de masquage conforme à la revendication 1 dans lequel ledit adhésif de type émulsion est un latex de caoutchouc naturel.

4. Elément de masquage conforme à une quelconque des revendications précédentes dans lequel ledit polymère hydrosoluble est le poly(alcool vinylique).

5. Elément de masquage conforme aux revendications 1, 2 ou 3 dans lequel ledit polymère hydrosoluble est la gélatine.

6. Procédé pour masquer une partie d'une surface à traiter, consistant à appliquer l'élément de masquage, conforme à une quelconque des revendications précédentes, sur les parties à protéger contre le traitement de surface, à effectuer le traitement de surface et à retirer l'élément de masquage.

7. Procédé conforme à la revendication 6 dans lequel l'élément est retiré par un crochet.

8. Procédé conforme à la revendication 6 ou 7 dans lequel la pièce est une carrosserie automobile.